# EUROPEAN PATENT APPLICATION

(11) **EP 4 841 595 A1**
(43) Date of publication of application: **18.11.2026**
(21) Application number: 25764532.5
(22) Date of filing: 14.05.2025
(51) Int. Cl.: G07C 5/08, G06F 11/07

(54) **AI-BASED VEHICLE DIAGNOSIS METHOD AND SYSTEM, ELECTRONIC DEVICE AND STORAGE MEDIUM**

(30) Priority: 24.03.2025 CN 202510347153
(71) Applicant: Launch Tech Co., Ltd, Longgang District Shenzhen Guangdong 518000 (CN)
(72) Inventor: LIU, Xin, Shenzhen, Guangdong 518000 (CN); JIANG, Wentian, Shenzhen, Guangdong 518000 (CN)
(74) Representative: Viering, Jentschura & Partner mbB Patent- und Rechtsanwälte
(86) International application number: PCT/CN2025/094729
(87) International publication number: WO 2026/199684

(57) **Abstract**

Provided are an AI-based vehicle diagnosis method and system, an electronic device and a storage medium. The method includes the following. A vehicle diagnosis main page of a diagnostic device is displayed. A target operating state of the diagnostic device is obtained. When the target operating state is a diagnosis abnormality state, an AI diagnosis interaction page is displayed in response to a trigger operation for an AI auxiliary control. A target question text corresponding to the information input operation is determined in response to an information input operation on the information input window, and the target question text is displayed in the first information-display-region. The target question text is analyzed with a target AI model pre-set in the diagnostic device to obtain a target diagnostic suggestion. The target diagnostic suggestion is displayed in the second information-display-region. By means of the present disclosure, the operation complexity of vehicle diagnosis is reduced.

## Description

### TECHNICAL FIELD

The present disclosure relates to the field of vehicle diagnosis, and in particular, to an artificial intelligence (AI)-based vehicle diagnosis method and system, an electronic device, and a storage medium.

### BACKGROUND

With the continuous improvement of the electronic degree of vehicles, the menu hierarchy of vehicles become increasingly deep, so that when a user encounters a problem in the process of using a diagnostic device, it is often impossible or difficult to describe the problem comprehensively.

Currently, a conventional intelligent vehicle diagnosis assistant generally performs diagnosis only depending on specific data such as a fault code input by a user, and is unable to perform analysis according to other input data of the user, so that it is difficult for the user to perform operations. Therefore, how to reduce the operation complexity of vehicle diagnosis becomes a problem to be solved urgently.

### SUMMARY

Provided are an artificial intelligence (AI)-based vehicle diagnosis method and system, an electronic device, and a storage medium. By introducing an AI auxiliary control, a user only needs to click one key to activate an AI function so as to perform vehicle diagnosis, without requiring a complex operation procedure, thereby reducing the operation complexity of vehicle diagnosis.

In a first aspect, an AI-based vehicle diagnosis method is provided in embodiments of the present disclosure. The method is applied to a diagnostic device and includes the following. A vehicle diagnosis main page of the diagnostic device is displayed, where the vehicle diagnosis main page includes an AI auxiliary control. A target operating state of the diagnostic device is obtained, the target operating state including one of the following: a normal state and a diagnosis abnormality state. In response to the target operating state being the diagnosis abnormality state, an AI diagnosis interaction page is displayed in response to a trigger operation for the AI auxiliary control, where the AI diagnosis interaction page has a first information-display-region, a second information-display-region, and an information input window. A target question text corresponding to an information input operation is determined in response to the information input operation on the information input window, and the target question text is displayed in the first information-display-region. The target question text is analyzed with a target AI model pre-set in the diagnostic device to obtain a target diagnostic suggestion. The target diagnostic suggestion is dismayed in the second information-display-region.

In a second aspect, an AI-based vehicle diagnosis system is provided in embodiments of the present disclosure. The system is applied to a diagnostic device and includes a displaying unit, a responding unit, and a diagnosing unit. The displaying unit is configured to display a vehicle diagnosis main page of the diagnostic device, where the vehicle diagnosis main page includes an AI auxiliary control. The responding unit is configured to obtain a target operating state of the diagnostic device, the target operating state including one of the following: a normal state and a diagnosis abnormality state; in response to the target operating state being the diagnosis abnormality state, display an AI diagnosis interaction page in response to a trigger operation for the AI auxiliary control, where the AI diagnosis interaction page has a first information-display-region, a second information-display-region, and an information input window; and determine a target question text corresponding to the information input operation in response to an information input operation on the information input window, and display the target question text in the first information-display-region. The diagnosing unit is configured to analyze the target question text with a target AI model pre-set in the diagnostic device to obtain a target diagnostic suggestion. The displaying unit is further configured to displaying the target diagnostic suggestion in the second information-display-region.

In a third aspect, an electronic device is provided in embodiments of the present disclosure. The electronic device includes a processor, a memory, a communications interface, and one or more programs stored in the memory and configured to be executed by the processor. The programs include instructions for executing the method in the first aspect.

In a fourth aspect, a computer-readable storage medium is provided. The computer-readable storage medium stores a computer program for electronic data interchange (EDI), and the computer program is configured to enable a computer to execute part of or all of operations described in the first aspect.

In a fifth aspect, a computer program product is provided. The computer program product includes a non-transitory computer-reader storage medium storing a computer program. The computer program is operable to enable a computer to execute part of or all of operations described in the first aspect.

The present disclosure has the following beneficial effects.

It can be seen that the present disclosure provides an AI-based vehicle diagnosis method and the method includes the following. A vehicle diagnosis main page of the diagnostic device is displayed, where the vehicle diagnosis main page includes an AI auxiliary control. A target operating state of the diagnostic device is obtained, the target operating state including one of the following: a normal state and a diagnosis abnormality state. In response to the target operating state being the diagnosis abnormality state, an AI diagnosis interaction page is displayed in response to a trigger operation for the AI auxiliary control, where the AI diagnosis interaction page has a first information-display-region, a second information-display-region, and an information input window. A target question text corresponding to an information input operation is determined in response to the information input operation on the information input window, and the target question text is displayed in the first information-display-region. The target question text is analyzed with a target AI model pre-set in the diagnostic device to obtain a target diagnostic suggestion. The target diagnostic suggestion is dismayed in the second information-display-region. In this way, by introducing an AI auxiliary control, the user only needs to click one key to activate an AI function (i. e. the target AI model) to perform vehicle diagnosis, without requiring a complex operation procedure, thereby reducing the operation complexity of vehicle diagnosis.

### BRIEF DESCRIPTION OF THE DRAWINGS

FIG. 1 is a schematic structural diagram of a diagnostic device provided in embodiments of the present disclosure.
FIG. 2 is a schematic diagram of an application scenario of an artificial intelligence (AI)-based vehicle diagnosis method provided in embodiments of the present disclosure.
FIG. 3 is a schematic flowchart of an AI-based vehicle diagnosis method according to an AI provided in embodiments of the present disclosure.
FIG. 4 is a schematic diagram of a vehicle diagnosis main page provided by an embodiment of the present disclosure;
FIG. 5 is a schematic diagram of an AI diagnosis interaction page provided by an embodiment of the present disclosure.
FIG. 6 is a schematic flowchart of a method for solving an abnormal state provided in embodiments of the present disclosure.
FIG. 7 is a schematic flowchart of a method for model optimization provided in embodiments of the present disclosure.
FIG. 8 is a block diagram of functional units of an AI-based vehicle diagnosis system provided in embodiments of the present disclosure.
FIG. 9 is a schematic structural diagram of an electronic device provided in embodiments of the present disclosure.

### DETAILED DESCRIPTION

In order to enable those skilled in the art to better understand solutions of the present disclosure, technical solutions in embodiments of the present disclosure will be described clearly and completely hereinafter with reference to the accompanying drawings in the embodiments of the present disclosure. Apparently, the described embodiments are merely some rather than all embodiments of the present disclosure. All other embodiments obtained by those of ordinary skill in the art based on the embodiments of the present disclosure without creative efforts shall fall within the protection scope of the present disclosure.

The terms "first", "second", and the like used in the specification, the claims, and the accompany drawings of the present disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, on the contrary, it can optionally include other steps or units that are not listed; alternatively, other steps or units inherent to the process, method, product, or device can be included either.

It may be understood that, the term "and/or" in the present disclosure is only an association relationship for describing associated objects, and indicates that three relationships may exist. For example, A and/or B may indicate three cases: A exists separately, A and B exist simultaneously, and B exists separately. In addition, the character "/" in this specification indicates a relationship of "or" between associated objects, and "a plurality of" or "multiple" in embodiments of the present disclosure refers to two or more.

The expression "at least one item" or the like in embodiments of the present disclosure refers to any combination of these items, including a singular item or any combination of multiple items, and refers to one or multiple items, where multiple items means two or more items. For example, at least one of a, b or c can represent the following seven cases: a, b, c, a and b, a and c, b and c, and a, b and c. Each of a, b, and c may be an element or a set including one or more elements.

The term "connection" used in embodiments of the present disclosure refers to various connection manners, such as direct connection or indirect connection, so as to implement communication between devices, which are not limited in embodiments of the present disclosure.

The term "embodiment" or "implementation" referred to herein means that a particular feature, structure, or feature described in conjunction with the embodiment may be contained in at least one embodiment of the present disclosure. The phrase appearing in various places in the specification does not necessarily refer to the same embodiment, nor does it refer to an independent or alternative embodiment that is mutually exclusive with other embodiments. It is expressly and implicitly understood by those skilled in the art that an embodiment described herein may be combined with other embodiments.

The electronic device described in embodiments of the present disclosure may include a diagnostic device, a smartphone (for example, an Android mobile phone, an iOS mobile phone, or a Windows phone), a tablet computer, a palmtop computer, a notebook computer, a video matrix, a monitoring platform, a mobile internet devices (MID), or a wearable device, which are only examples and are not exhaustive, and the electronic device includes, but is not limited to, the above devices.

Definitely, the electronic device may also be a server, for example, a cloud server.

Related contents, concepts, meanings, technical problems, technical solutions, beneficial effects, and the like involved in embodiments of the present disclosure will be described below.

Firstly, some technical terms involved in the present disclosure will be explained and illustrated:
Vehicle diagnosis refers to a process of checking, testing, analyzing, and judging a technical condition, a performance index, and a fault condition of a vehicle such as an automobile by using a professional technical means, a tool, and a method. By means of vehicle diagnosis, whether a vehicle has a fault and the specific location and reason of the fault can be determined, and a possible problem of the vehicle can be predicted, thereby providing a basis for the maintenance and normal operation of the vehicle. For example, a diagnostic device is used to read a fault code of a vehicle, check various parameters of an engine, and detect an operating state of an electric system of the vehicle.

A large language model (LLM) is a deep learning based artificial intelligence (AI) model. By learning and training massive text data, semantics, grammar and context of a natural language can be understood, and a natural smooth text reply is generated. A LLM usually has a large parameter scale, such as a generative pre-trained transformer (GPT) series model, etc. It can be used for various natural language processing tasks, such as text generation, question-and-answer systems, machine translation, text abstract, etc. In the field of vehicle diagnosis, an LLM can generate text contents, such as relevant diagnostic suggestions and fault cause analysis, according to a description about a vehicle fault input by a user.

Migration learning is a machine learning technology, intended to apply knowledge learned from one or more source tasks to a target task. In migration learning, a source task and a target task generally have a certain correlation. By means of migration learning, knowledge, such as a feature representation and a model parameter, already learned in the source task can be used, thereby reducing the amount of training data and training time of the target task, and improving the performance of a model on the target task. For example, in vehicle diagnosis, a model may be pre-trained on large-scale general natural language data first, and then knowledge of the pre-trained model is migrated to a specific task in the field of vehicle fault diagnosis by means of the migration learning technology, so that the model can learn and process text data related to vehicle fault diagnosis faster and better.

A retrieval augmented generation (RAG) service is a technical service that combines information retrieval and text generation. In the RAG service, related information is first retrieved from a pre-constructed knowledge base (e. g., a document base, a database, etc.) according to a question or instruction input by a user, then the retrieved information is input into a text generating model (e. g., an LLM) together with content input by the user, and the model generates a corresponding reply or text according to the information. By introducing the retrieved external knowledge, the RAG service can make the generated text more accurate, reliable, and targeted. In vehicle diagnosis, the RAG service can retrieve information, such as a maintenance manual, a fault case, and a technical document, related to a vehicle fault, and assist the LLM to generate a more accurate diagnostic suggestion and solution.

With the increase of the complexity of an automotive electronic system, a conventional diagnostic device has obvious deficiencies in real-time, interactive, and self-learning capabilities, which makes it difficult for a user to obtain immediate help and support when encountering a problem. In addition, when a diagnosis process reaches an impasse or a "dead end", the user is often unable to solve the problem independently, which causes the diagnosis task to be forcibly interrupted. Embodiments of the present disclosure provide an AI-based vehicle diagnosis method. By introducing an AI auxiliary control on a diagnostic device, the user only needs to click the AI auxiliary control to activate an AI interaction function of the diagnostic device. The user is allowed to input a question description in a natural language. An AI auxiliary module in the diagnostic device incorporates multiple advanced AI models for processing data from a user operation record, log information, and a current vehicle state, performing comprehensive analysis by using technologies such as a deep learning algorithm and a fault knowledge map, and providing highly targeted diagnosis recommendations. With the method, not only can subsequent operations of a user be continuously monitored, but also can model parameters be updated according to new data to improve the accuracy and efficiency of future diagnostic tasks. Also provided is a powerful self-learning capability, capable of continuously optimizing a model parameter thereof, thereby improving the identification and processing capability for a new type of fault. As such, the user experience is significantly improved, not only the operation complexity of vehicle diagnosis is reduced, but also interruption times during the diagnosis is reduced, thus improving the overall operation efficiency.

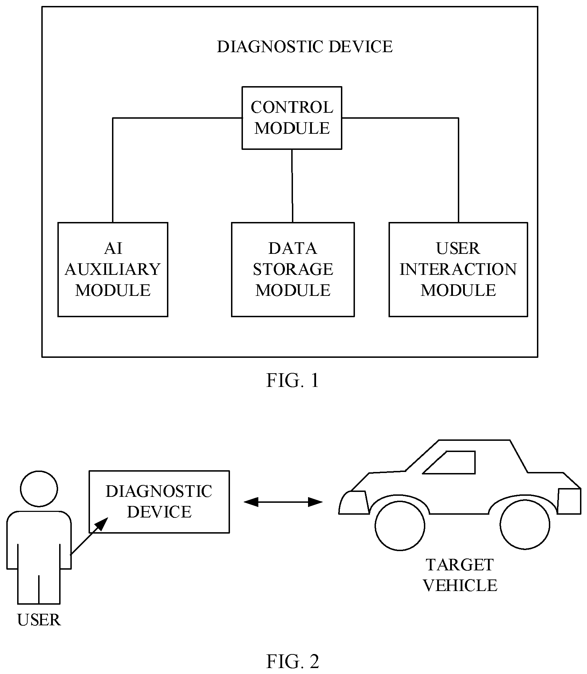

Reference is made to FIG. 1, which is a schematic structural diagram of a diagnostic device provided in embodiments of the present disclosure. It can be seen that the diagnostic device may include a control module, a user interaction module, an AI auxiliary module, a data storage module, and the like, which is not limited herein.

The control module, as a "brain" of the diagnostic device, is responsible for coordinating and managing the operation of the whole device. The control module can schedule the work of each module and ensure the smooth cooperation between these modules, for example, after a user inputs information via the user interaction module, the control module will schedule the AI auxiliary module to process the input information, and transmit a processing result to a corresponding module for display or storage.

The user interaction module is used for providing an input interface for a user, so that the user can input various information, such as a vehicle fault description, a vehicle model, and a driving range, to a diagnostic device through the user interaction module. In addition, the user interaction module can also collect operation behavior data of the user, for example, the frequency of a user inputting a question, a duration of a user viewing a diagnosis result, etc., which can be used for optimizing the user experience and evaluating the diagnosis system. The user interaction module can further display the results and information generated by the diagnostic device to the user, including various contents in a vehicle diagnosis main page and an AI diagnosis interaction page, such as a target question text and a target diagnostic suggestion. In addition, the status of the system, such as processing, completed, and error, can be fed back to the user in an intuitive manner via the user interaction module, so that the user can understand the progress of the diagnosis process.

The AI auxiliary module incorporates various AI models, such as a target AI model, and is responsible for computing and analyzing a target question text input by a user and data obtained from other modules. During vehicle diagnosis, the AI auxiliary module can use a deep learning algorithm and an existing fault knowledge map according to the description of a vehicle fault, to analyze possible fault causes, fault locations, and recommend corresponding diagnostic methods and solutions. Furthermore, the AI auxiliary module can also have the capability of self-learning and optimization, and can adjust and optimize a model parameter thereof according to continuously input new data and an actual diagnosis result, so as to improve the accuracy and efficiency of diagnosis. For example, when encountering a new vehicle fault type or condition, the AI auxiliary module can update its own knowledge hierarchy by learning relevant data to be able to more accurately handle similar problems in subsequent diagnoses.

The data storage module is responsible for storing various data generated and used by the diagnostic device during operation, including historical diagnosis records of the vehicle, question texts and feedback information input by the user, training data of an AI model, and vehicle technical data and fault cases obtained from the outside. By establishing a reasonable data structure and a database management system, the data storage module effectively organizes and manages these data, thereby facilitating data query, data update, and data invocation.

Reference is made to FIG. 2, which is a schematic diagram of an application scenario of an AI-based vehicle diagnosis method provided in embodiments of the present disclosure. It can be seen that a user is a subject that initiates a diagnosis request, and inputs a problem or information of a vehicle (i. e. a target vehicle in FIG. 2) to a diagnostic device by interacting with the diagnostic device, for example, describing a fault phenomenon or an operating condition of the vehicle. The diagnostic device is located at a core position, on the one hand, the diagnostic device receives information input by a user, on the other hand, the diagnostic device can also be connected to the target vehicle to obtain relevant data of the vehicle, perform an AI diagnosis according to the diagnostic device receives information and the relevant data of the vehicle. The diagnostic device finally feeds back a diagnosis result to the user. The target vehicle is a vehicle that needs to be diagnosed, and is in communication connection with the diagnostic device, so as to provide data of the vehicle for the diagnostic device, so that the diagnostic device analyzes a vehicle condition and searches for a fault cause.

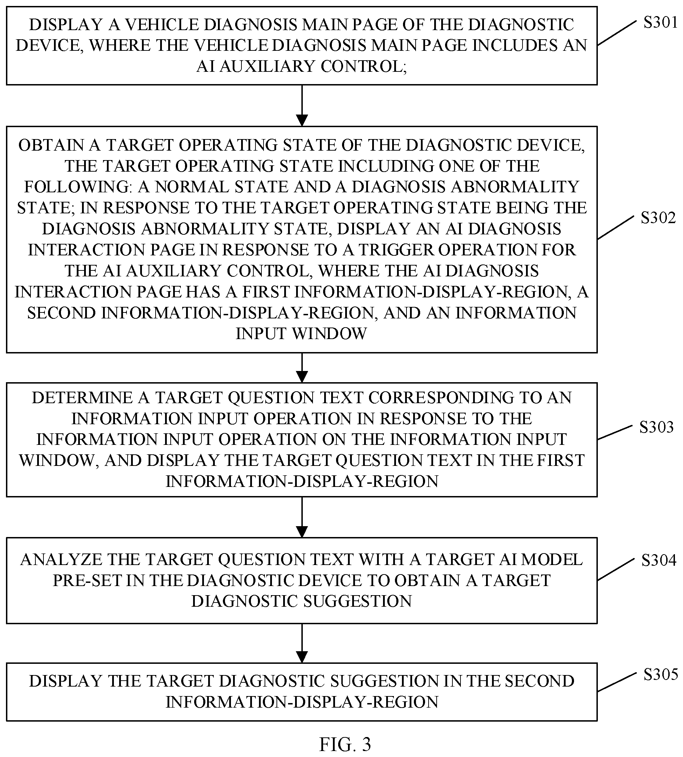

Reference is made to FIG. 3, which is a schematic flowchart of an AI-based vehicle diagnosis method provided in embodiments of the present disclosure. The method is applied to a diagnostic device. The method may include, but is not limited to, the following operations.

At S301, a vehicle diagnosis main page of the diagnostic device is displayed, where the vehicle diagnosis main page includes an AI auxiliary control.

In embodiments of the present disclosure, the diagnostic device may include at least one of the following: an intelligent mobile device (for example, a mobile phone or a computer), a portable diagnostic instrument, a specialized maintenance station diagnostic device, etc., which is not limited herein.

In an embodiment, when the diagnostic device is started, the vehicle diagnosis main page may be displayed on a page of the diagnostic device, and a user may perform an operation on the vehicle diagnosis main page, for example, by clicking the AI auxiliary control to enter an AI diagnosis interaction page.

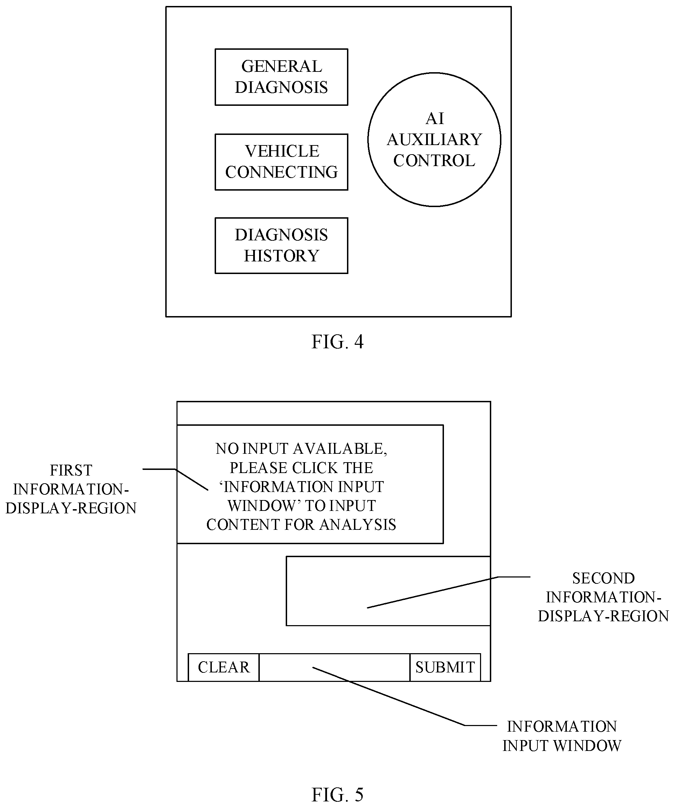

In an embodiment, reference is made to FIG. 4, which is a schematic diagram of a vehicle diagnosis main page provided in embodiments of the present disclosure. It can be seen that the vehicle diagnosis main page may include: general diagnosis, vehicle connecting, diagnosis history, an AI auxiliary control, and the like, which is not limited herein.

General diagnosis is a functional option, and after the general diagnosis is clicked, the diagnostic device can diagnose a vehicle by reading a fault code of the vehicle, detecting sensor data, and the like according to a traditional diagnosis process, which is applicable to a situation in which there is an explicit diagnosis direction or no AI depth analysis is required.

Vehicle connecting is an option used for establishing a connection between the diagnostic device and the target vehicle. After the vehicle connecting is clicked, the diagnostic device can be connected to a vehicle of a user by means of an on-board diagnostics (OBD) interface, Bluetooth, or other wireless connection modes, so that the diagnostic device can obtain real-time data and information about the vehicle and prepare for a subsequent diagnosis operation.

Diagnosis history: after this option is clicked, a record of previous diagnosis of the vehicle can be viewed, including information such as diagnosis time, a problem found, and an action taken, so that a user and a serviceman can conveniently know previous situations of the vehicle, and perform comparative analysis.

The AI auxiliary control is presented in a circle, and is an entrance for performing vehicle diagnosis with the AI technology. When a user triggers the control, the AI diagnosis interaction page is entered, and a more intelligent and comprehensive diagnostic suggestion is obtained by interacting with the AI. For example, after a vehicle fault description is input, the AI provides an analysis result according to a large amount of data and an algorithm.

These functional modules together constitute the vehicle diagnosis main page, providing the user with diversified vehicle diagnosis operation entries.

At S302, a target operating state of the diagnostic device is obtained, where the target operating state includes one of the following: a normal state and a diagnosis abnormality state. When the target operating state is the diagnosis abnormality state, an AI diagnosis interaction page is displayed in response to a trigger operation for the AI auxiliary control, where the AI diagnosis interaction page has a first information-display-region, a second information-display-region, and an information input window

In embodiments of the present disclosure, the target operating state of the diagnostic device can be obtained first. Specifically, the diagnostic device incorporates a state monitoring system. For a hardware-related problem, various operation parameters, such as a temperature, a voltage, a current, and a rotation speed, of the diagnostic device can be collected in real time with a sensor. A control module of the diagnostic device may compare these real-time parameters with pre-set normal ranges. If the parameters are all within the normal ranges and each function of the device can run normally, it may be determined that the device is in a normal state. If one or more parameters are beyond normal ranges, or a fault code, an alarm prompt, or the like occurs in the diagnostic device, the diagnostic device is in the abnormal diagnosis state. For a software-related problem, the state monitoring system may analyze current running data of the diagnostic device, and determine whether the device has a potential fault or an abnormality. If the state monitoring system determines that the device has a potential fault or an abnormality, the diagnostic device is determined to be in the abnormal diagnosis state; otherwise, the diagnostic device is determined to in the normal state. For example, the state monitoring system determines existence of abnormal conditions that the diagnosis process reaches a "dead end", or workflow interruptions occurring when the user is unable to proceed beyond specific steps. When the target operating state is a diagnosis abnormality state, the user may click the AI auxiliary control to trigger an AI diagnosis function of the diagnostic device. Specifically, the diagnostic device may respond to a trigger operation performed by the user (i. e. a click operation of the user) on the AI auxiliary control, and display the AI diagnosis interaction page, so that the user can perform an operation on the AI diagnosis interaction page, to transition the diagnostic device from the diagnosis abnormality state back to the normal state.

Reference is made to FIG. 5, which is a schematic diagram of an AI diagnosis interaction page provided in embodiments of the present disclosure. It can be seen that the AI diagnosis interaction page may include a first information-display-region, a second information-display-region, an information input window, clean, submit, and the like, which is not limited herein.

The first information-display-region is located at the top of the page, and is used to promote "no input available, please click the 'information input window' to input content for analysis" when the diagnostic device does not receive any information input by the user, so as to guide the user to input. After the user inputs the content, the first information-display-region is used for displaying the content input by the user (i. e. the target question text), so that the user can conveniently confirm the input information.

The second information-display-region is in the middle of the page. When the diagnostic device does not receive any information input by the user, the region is blank, and the second information-display-region is used for displaying a target diagnostic suggestion obtained after an AI model analyses a problem input by the user.

The information input window is at the bottom of the page, where the user inputs information such as description about a vehicle problem, etc., and two buttons "clear" and "submit" may also be provided beside the information input window. Click the "Clear" button to clear the contents in the information input window, and click the "Submit" button to send the input information to the target AI model for analysis and processing. The whole page layout is simple, and the user is guided to complete the interaction diagnosis process with the AI through the information input window and the operation buttons.

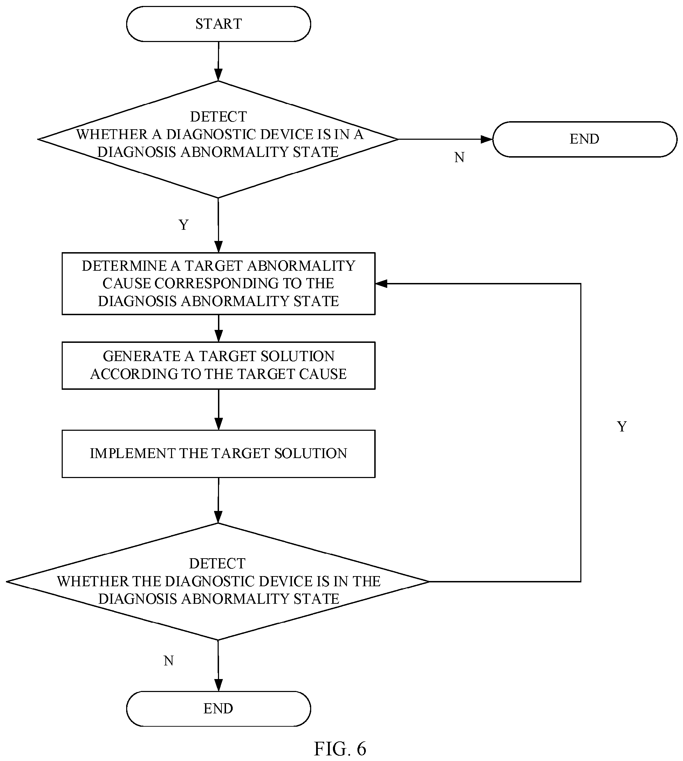

Alternatively, in an embodiment, reference is made to FIG. 6, which is a schematic flowchart of a method for solving an abnormal state provided in embodiments of the present disclosure, which will be elaborated as follows.

Start: start of procedure.

Detect whether a diagnostic device is in a diagnosis abnormality state. a current operating state of the diagnostic device is determined. if the diagnostic device is normal (N), directly end the flow; and If the diagnostic device is in the diagnosis abnormality state (Y), proceed to the next step.

Determine a target abnormality cause corresponding to the diagnosis abnormality state. A specific cause for device abnormality is found.

Generate a target solution according to the target cause. A corresponding solution is formulated according to a found cause.

Implement the target solution. The formulated solution is implemented.

Detect whether the diagnostic device is in the diagnosis abnormality state. The state of the device is checked again, and if the device is still in the diagnosis abnormality state (Y), return to re-determine an abnormality cause and solving the abnormality. If the device is restored to normal (N), the process ends.

In this flow, through continuously detecting, locating a cause, generating and executing a solution until the diagnosis abnormal state of the device is resolved, the diagnostic device can be ensured to operate normally.

For example, when the target operating state is the diagnosis abnormality state, a device running log of the diagnostic device may be obtained, the device running log is analyzed with the target AI model, the cause for the abnormality of the diagnostic device is determined, and a target abnormality cause is obtained. Assuming that the target abnormality cause is "a diagnosis flow being stuck", then the stuck can be prompted and analyzed in the first information-display-region. For example, if "the device is stuck due to insufficient memory during the data collection process" is prompted in the first information-display-region, the user may identify the cause of the problem according to the prompt.

The target solution is displayed in the second information-display-region. For example, "please try to close other unnecessary programs to free up memory space" may be displayed in the second information-display-region. According to the target solution, the user closes unnecessary programs currently running through a task manager or a relevant operation interface of the diagnostic device, or the user may also authorize the target AI model to enable the target AI model to automatically execute the target solution. After the target solution is executed, the user may further feedback an operation condition in the information input window. For example, the user inputs, in the information input window, "programs such as [specific program names] have been closed, and request to restart the progress" is requested. After receiving the feedback, the diagnostic device automatically tries to restart the data collection process which is stuck. The data collection process can recover to be normal if the memory space is enough, and the state of the device changes to be a normal state. For another example, assuming that the target abnormality cause is "diagnosis process interruption", likewise, an interruption cause (i. e. the target abnormality cause) may be displayed in the first information-display-region. For example, "diagnosis process interruption due to network connection interruption" is displayed in the first information-display-region, so that the user recognized that the cause is network-related problem.

The target solution is displayed in the second information-display-region. For example, a solution of "check network device connection, restart a router or attempt to switch a network" is displayed in the second information-display-region. The user may first check whether a connection line between the device and the network device (for example, a router) is loose, and then restart the router. If the problem is still unsolved, the user may make an attempt to switch to other available networks in network setup of the device, or the target solution may also be performed automatically by the target AI model. After the target solution is executed, the user may input a processing result in the information input window, for example, the user inputs "network connection is checked, the router is restarted, and a standby network is switched to, and request to restore the diagnosis process" in the information input window. After receiving the information, the diagnostic device tries to connect to the network again and recovers the interrupted diagnosis process. If the network connection is successful, the process continues, and the diagnostic device recovers to a normal state.

At S303. a target question text corresponding to an information input operation in is determined in response to the information input operation on the information input window, and the target question text is displayed in the first information-display-region.

In embodiments of the present disclosure, in response to the information input operation on the information input window, a question input by the information input operation is received, and subsequently, the question may be taken as the target question text to be displayed in the first information-display-region.

Alternatively, the target question text corresponding to an information input operation in is determined in response to the information input operation as follows.
31, in response to the information input operation on the information input window, a question text input by the information input operation is received to obtain a first question text, where the first question text is a representation text of a natural language.
32, a first keyword is extracted from the first question text to obtain *m* first keywords, *m* being a positive integer.
33, a target communication intent is determined according to the *m* first keywords, where the target communication intent includes one of the following: a chat intent and an inquiry intent.
34, the first question text is converted into a text in a pre-set format according to the target communication intent and the *m* first keywords to obtain the target question text.

In the embodiment of the present disclosure, the pre-set format may be pre-set in advance or may be default.

In an embodiment, the question text input by the information input operation is received in response to the information input operation on the information input window, and the first question text is obtained. For example, the user clicks on the information input window, and then starts typing "My car's check engine light came on while driving, and the car was shaking violently". "My car's check engine light came on while driving, and the car was shaking violently" is the obtained as the first question text. Then, the first keyword in the first question text may be extracted to obtain *m* first keywords. The first question text may be divided into individual words or phrases using a word segmentation tool to obtain the *m* first keywords. For example, a tool such as *jieba* word segmentation may be used for Chinese text, and a word segmentation function in Natural Language toolkit (NLTR) may be used for English text. For example, keyword extraction is performed using *jieba* word segmentation on "My car's check engine light came on while driving, and the car was shaking violently", key words obtained are [car], [driving], [engine], [check engine light], [on], and [shaking]. These keywords can more accurately generalize the core information described in the text, i. e., the abnormality that the check engine light came up and the vehicle shakes while the vehicle is running.

Further, the target communication intent is determined according to the *m* first keywords. Specifically, the *m* first keywords can be classified, keywords having an obvious semantic tendency are identified, and then the target communication intent is determined according to the keywords having an obvious tendency. For example, keywords such as "fault", "cause", "solution", and "how to" often relate to asking for specific information. However, keywords such as "feel", "funny", and "casual chat" are more biased towards a chat scene. Finally, the first question text may be converted into the text in the pre-set format according to the target communication intent and the *m* first keywords to obtain the target question text. For example, the pre-set format may be "[communication intent]: [communication theme]: [keyword 1], [keyword 2] ... [question text]". The first question text is converted into the text in the pre-set format, that is, the target question text.

In this way, by extracting the *m* first keywords from the first question text, the core content of the text can be quickly obtained, and insignificant information can be filtered out. For example, when a large number of user consults are processed, key words such as "vehicle", "fault", and "maintenance" are quickly located, so that the key problem can be focused directly without searching for key content repeatedly in a lengthy text, thereby greatly improving the speed and accuracy of information processing. In addition, by converting the question text into the target question text in the pre-set format, the data is more standardized and structured, which is more convenient to perform statistical analysis on user questions and evaluate system response effects. For example, the frequency of occurrence of questions with different types of inquiry intents can be easily counted, and hotspot questions concerned by users can be learned, which can provide data support for optimization of the system.

At S304, the target question text is analyzed with a target AI model pre-set in the diagnostic device to obtain a target diagnostic suggestion.

In embodiments of the present disclosure, the target question text may be input into the target AI model, and the target AI model is used to analyze the target question text and perform diagnosis to obtain the target diagnostic suggestion.

Optionally, the method can further include the following.

A1, a pre-set first model and a pre-trained model are obtained, where both the first model and the pre-trained model are large language models.

A2, a target task corresponding to the first model is obtained.

A3, migration learning is performed on the first model to obtain a second model according to the pre-trained model and the target task.

A4, first historical vehicle-diagnosis-data is obtained, where the first historical vehicle-diagnosis-data includes a question text and a diagnostic suggestion corresponding to the question text.

A5, the first historical vehicle-diagnosis-data is pre-processed to obtain second historical vehicle-diagnosis-data.

A6, the second historical vehicle-diagnosis-data is divided into a training set and a test set according to a pre-set proportion.

A7, the second model is trained with the training set to obtain a third model.

A8, whether the third model meets a pre-set condition is determined.

A9, in response to the third model meeting the pre-set condition, the third model is determined as the target AI model.

A10, in response to the third model not meeting the pre-set condition, the third model is continued to be trained until a trained third model meets the pre-set condition, and the third model meeting the pre-set condition is determined as the target AI model.

In embodiments of the present disclosure, the first model, the pre-trained model, the pre-set proportion, and the pre-set condition may be pre-set in advance or may be default.

In an embodiment, the pre-set first model and the pre-trained model are obtained first; then, the target task corresponding to the first model is obtained; and since the first model is finally to be pre-set on the diagnostic device, the target task of the first model is determined to be "vehicle diagnosis". The pre-trained model is a large language model (LLM) that has been trained with large-scale general text data.

Then, migration learning is performed on the first model according to the pre-trained model and the target task to obtain the second model. Specifically, the structures of the first model and the pre-trained model are adjusted appropriately according to the characteristics of the target task. For example, some specific task layers may be added on the first model, such as a classification layer for classifying fault types, a decoding layer for generating diagnostic steps, etc. Then, a corresponding layer of the first model may be initialized by using a weight of the pre-trained model, and a general language feature learned by the pre-trained model is migrated to the first model, so as to obtain the second model. Then, the first historical vehicle-diagnosis-data is obtained. Specifically, vehicle-diagnosis-data can be queried and obtained from a data storage module of the diagnostic device, so as to obtain the first historical vehicle-diagnosis-data. Alternatively, diagnosis data can also be downloaded from a vehicle manufacturer's website for the user's vehicle, so as to obtain the first historical vehicle-diagnosis-data. Then, the first historical vehicle-diagnosis-data can be pre-processed to obtain second historical vehicle-diagnosis-data. Specifically, pre-processing operations such as data cleaning, data labeling, and data conversion can be sequentially performed on the first historical vehicle-diagnosis-data to obtain the second historical vehicle-diagnosis-data.

Further, the second historical vehicle-diagnosis-data may be divided into the training set and the testing set according to the pre-set proportion. For example, the order of the second historical vehicle-diagnosis-data may be disordered first, and then the second historical vehicle-diagnosis-data in the disordered data order is divided according to the pre-set proportion. It is assumed that the pre-set proportion is 8:2, that is, 80% of data is used as the training set, and 20% of data is used as the test set. If there are 1000 pieces of data on record in total, the first 800 pieces of data may be grouped as the training set, and the last 200 pieces of data are grouped as the testing set. Then, the second model is trained with the training set to obtain the third model. Next, whether the third model meets the pre-set condition is determined. If the third model meets the pre-set condition, the third model is determined as the target AI model.

If the third model does not meet the pre-set condition, the third model is continued to be trained until the trained third model meets the pre-set condition, and the third model meeting the pre-set condition is taken as the target AI model. It may be noted that, the pre-set condition may be that the accuracy rate of the model is greater than a pre-set accuracy rate (for example, 80%), or the number of training times of the model is greater than a pre-set number (for example, 10 times).

In this way, by means of performing migration learning on the first model, the capability of the pre-trained model is migrated to the first model, thereby preventing the first model from being trained on a zero basis, greatly reducing training time and computing resource consumption, rapidly starting a training process on a target task, and improving the efficiency of model training.

Optionally, at S304, the target question text is analyzed with the target AI model pre-set in the diagnostic device to obtain the target diagnostic suggestion as follows
B1, historical vehicle-diagnosis-data of the diagnostic device is obtained as third historical vehicle-diagnosis-data.
B2, whether the target question text is contained in the third historical vehicle-diagnosis-data is determined.
B3, if the target question text is contained in the third historical vehicle-diagnosis-data, a diagnostic suggestion corresponding to the target question text in the third historical vehicle-diagnosis-data is determined as the target diagnostic suggestion.
B4, if the target question text is not contained in the third historical vehicle-diagnosis-data, a diagnostic suggestion corresponding to the target question text is generated with the target AI model according to the target communication intent as a first diagnostic suggestion.
B5, running data and log data of a target vehicle corresponding to the target question text are obtained as target running data and target log data; and
B6, the target diagnostic suggestion is determined according to the target running data, the target log data, and the first diagnostic suggestion.

In embodiments of the present disclosure, the third historical vehicle-diagnosis-data includes a question text and a diagnostic suggestion corresponding thereto.

In an embodiment, the historical vehicle-diagnosis-data of the diagnostic device is first obtained as the third historical vehicle-diagnosis-data. Specifically, the historical vehicle-diagnosis-data may be queried from a data storage module of the diagnostic device to obtain the third historical vehicle-diagnosis-data. Then, whether third historical vehicle-diagnosis-data contains the target question text is determined. Specifically, a keyword in the target question text can be extracted to obtain n keywords, where n is a positive integer. Then, for each question text on record in the third historical vehicle-diagnosis-data, a keyword extraction operation is also performed to obtain p keyword sets, where p is a positive integer greater than 1. Match the n keywords with each keyword set in the p keyword sets to obtain p matching results, where each matching result includes a proportion of keywords that are matched successfully. Whether the third historical vehicle-diagnosis-data contains the target question text is determined according to the p matching results. If there is a matching result having a proportion of keywords greater than a pre-set proportion of keywords (for example, 50% or more) in the p matching results, the third historical vehicle-diagnosis-data is determined to contain the target question text. Otherwise, if the p matching results do not include any matching result having a proportion of keywords greater than the pre-set proportion of keywords (for example, 50% or more), it is determined that the third historical vehicle-diagnosis-data does not include the target question text.

If the target question text is contained in the third historical vehicle-diagnosis-data, the diagnostic suggestion corresponding to the target question text in the third historical vehicle-diagnosis-data is determined as the target diagnostic suggestion. Specifically, a matching result with the largest proportion of successfully matched keywords in the p matching results is determined as the target matching result, and the diagnostic suggestion corresponding to the target matching result in the third historical vehicle-diagnosis-data is determined as the target diagnostic suggestion.

If the target question text is not contained in the third historical vehicle-diagnosis-data, a diagnostic suggestion corresponding to the target question text is generated according to the target communication intent with the target AI model, so as to obtain the first diagnostic suggestion. Specifically, the target communication intent and the target question text are input into the target AI model, and the target AI model generates the first diagnostic suggestion. Further, running data and log data of the target vehicle corresponding to the target question text are obtained as the target running data and the target log data. Specifically, the diagnostic device may be in communication with or physically connected to the target vehicle. For example, a connecting device of the diagnostic device (e. g., an OBD-II Bluetooth adapter, universal serial bus (USB) adapter) is plugged into a corresponding interface of the target vehicle (e. g., an OBD-II interface) for establishing a connection with the diagnostic device by means of Bluetooth or a USB so as to ensure the stability of the connection and facilitate the smooth acquisition of data. then, the running data and the log data of the target vehicle are collected, thereby obtaining the target running data and target log data. Finally, the target diagnostic suggestion is determined according to the target running data, the target log data, and the first diagnostic suggestion.

In this way, by determining whether the third historical vehicle-diagnosis-data contains the target question text, it can be quickly determined whether a ready diagnostic suggestion can be directly obtained from historical data. If the third historical vehicle-diagnosis-data contains the target question text, it is unnecessary to perform operations such as complex generation by model, and history experience is directly invoked, thereby greatly improving the generation efficiency of a diagnostic suggestion, and saving time and computing resources. If the third historical vehicle-diagnosis-data does not contain the target question text, a diagnostic suggestion is generated according to the target communication intent with the target AI model, demonstrating adaptability in handling novel a new question. The AI model can analyze and reason new and un-encountered problems by learning patterns and rules in a large amount of data, so as to generate reasonable diagnostic suggestions and compensate for limitations of historical data, thereby enabling the system to adapt to continuously changing vehicle fault conditions.

Optionally, the target diagnostic suggestion is determined according to the target running data, the target log data, and the first diagnostic suggestion as follows.
C1, fault code data in the target log data is determined.
C2, target fault type is determined according to the target running data and the fault code data.
C3, the first diagnostic suggestion is verified according to the target fault type to obtain a target verification result; where the target verification result includes a verification success or a verification failure.
C4, if the target verification result is the verification success, the target diagnostic suggestion is determined according to the first diagnostic suggestion.
C5, if the target verification result is the verification failure, a diagnostic suggestion corresponding to the target fault type is determined as the target diagnostic suggestion.

In embodiments of the present disclosure, the target running data may include at least one of the following: an engine speed, a vehicle speed, a coolant temperature, an oil pressure, a throttle opening degree, etc., which is not limited herein.

In an embodiment, the fault code data in target log data can be determined. Specifically, in a log file, fault code data usually has a specific format and identifier, and a common fault code format, such as a fault code of an OBD-II standard, begins with "P", "C", "B", and "U", and is followed by a four-digit number. The fault code data can be located by searching in the log file for codes beginning with these specific characters. In addition, related fault code data can be further determined according to information such as timestamps and event descriptions in the log file in combination with the time and phenomenon of the vehicle fault. then, a target fault type can be determined according to target running data and fault code data. Specifically, a fault code manual provided by a vehicle manufacturer, an on-line database, or professional diagnostic software can be used first to search for the specific meaning of the obtained fault code data to obtain multiple possible fault types. Each fault code corresponds to a specific fault range or a possible fault cause. For example, fault code P0171 generally indicates that the fuel system is too lean and may be associated with components such as an air flow meter, a fuel injector, and an oxygen sensor. Further, the most likely fault type may be selected from the multiple fault types according to the target running data, i.e. the target fault type. For example, the target running data shows that the air flow meter displays an intake air volume which is 20% higher than a standard value at idle while the data of the fuel injector and the data of the oxygen sensor are in normal ranges, and then the target fault type may be determined as an air flow meter fault.

Then, the first diagnostic suggestion can be verified according to the target fault type to obtain the target verification result. Specifically, the running data of the target vehicle can be collected before and after the user implements the first diagnostic suggestion. The running data after the first diagnostic suggestion is implemented is compared with the normal running data standard value and the running data before the first diagnostic suggestion is implemented, if the running data abnormality caused by the target fault type is obviously improved after the diagnostic suggestion is implemented, and the running data after the first diagnostic suggestion is implemented is close to the standard value, it indicates that the diagnostic suggestion is valid, that is, the target verification result is verification succeed. For example, the fault type is transmission shift shock, the first diagnostic suggestion is to replace the transmission fluid, and after the transmission fluid is replaced, running data such as revolutions per minute (RPM) fluctuation during shifting returns to normal parameters, which verifies the correctness of the diagnostic suggestion, otherwise, the target verification result is verification failure. If the target verification result is the verification success, the first diagnostic suggestion may be directly taken as the target diagnostic suggestion. If the target verification result is the verification failure, a diagnostic suggestion corresponding to the target fault type is generated as the target diagnostic suggestion. Specifically, both the target fault type and the target question text can be input into the target AI model, and the target AI model outputs the target diagnostic suggestion.

In this way, by determining fault code data in the target log data, a definite direction can be provided for fault diagnosis, and a fault code is a visual identification of a fault by a vehicle system. In addition, the target fault type is determined in conjunction with the target running data, and faults can be comprehensively analyzed from multiple dimensions, thereby avoiding misjudgment caused only by single data, so that a vehicle fault is located more precisely.

Optionally, in an embodiment, a server of the diagnostic device is deployed with a retrieval augmented generation (RAG) service, and the target question text is analyzed with the target AI model pre-set in the diagnostic device to obtain the target diagnostic suggestion as follows.
D1, the target question text is transmitted to the server, data related to the target question text is retrieved through the RAG service, and first retrieval data is obtained.
D2, the first retrieval data and the target question text are fused to obtain a target fused text.
D3, the target fused text is analyzed with the target AI model to obtain the target diagnostic suggestion.

In embodiments of the present disclosure, the diagnostic device may transmit the target question text to the server, and data related to the target question text is retrieved through the RAG service on the server, and the first retrieval data is obtained. Specifically, key features, such as a keyword and a topic word, can be extracted from the target question text, according to the extracted key features, keyword matching search is performed in a pre-set database (e. g. a fault code maintenance document database and a maintenance document vector knowledge base) stored in a server. A query function of the database may be used, for example, fuzzy matching is performed using LIKE statements in a relational database, or a corresponding query method is used in a non-relational database, so as to obtain the first retrieval data. The server may then send the first retrieved data to the diagnostic device. Then, the diagnostic device may fuse the first retrieval data and the target question text to obtain the target fused text. Specifically, the first retrieval data and the target question text may be spliced together according to a certain sequence, so as to obtain the target fuse tex. For example, if the target question text is "what causes car engine shaking", and the first retrieval data contains that "Engine shaking may be caused by spark plug failure", then the two can be directly spliced into "What causes car engine shaking? Engine shaking may be caused by spark plug failure". Finally, the target fused text can be analyzed with the target AI model to obtain the target diagnostic suggestion.

In this way, by fusing the first retrieval data and the target question text, it is helpful for the AI model to better understand the background and context of the question. The fused target fused text contains more semantic information, and can enable the model to more accurately grasp the key and intent of a question, thereby improving the accuracy and depth of model analysis.

At S305, the target diagnostic suggestion is displayed in the second information-display-region.

In embodiments of the present disclosure, the target diagnostic suggestion may be displayed in the second information-display-region of the AI diagnosis interaction page, so as to prompt a user to perform an operation according to the target diagnostic suggestion.

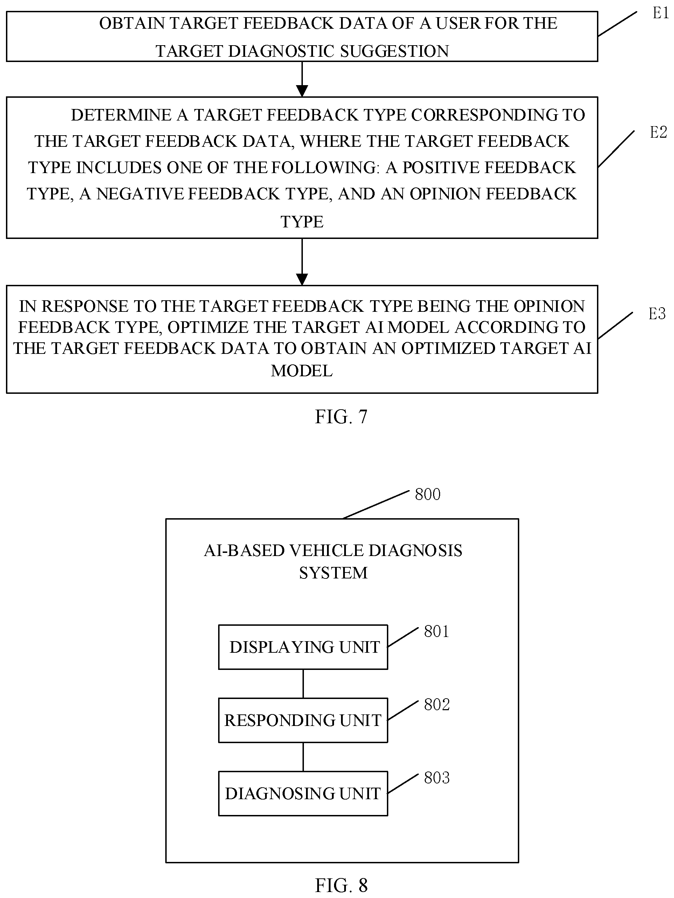

Alternatively, reference is made to FIG. 7, FIG. 7 is a schematic flowchart of a method for model optimization provided in embodiments of the present disclosure. After the target diagnostic suggestion is displayed in the second information-display-region, the method can further include the following.

At E1, target feedback data of a user is obtained for the target diagnostic suggestion.

At E2, a target feedback type is determined corresponding to the target feedback data, where the target feedback type includes one of the following: a positive feedback type, a negative feedback type, and an opinion feedback type.

At E3, if the target feedback type is the opinion feedback type, the target AI model is optimized according to the target feedback data to obtain an optimized target AI model.

In embodiments of the present disclosure, the target feedback data of the user for the target diagnostic suggestion can be obtained. Specifically, the information input window may be clicked by the user, and the target feedback data is directly input to the diagnostic device, and then, the target feedback type corresponding to target feedback data can be determined. Specifically, pre-set sentiment lexicons can be used, e.g., a Website sentiment dictionary or a HowNet, the word in the target feedback data is matched with sentiment words in the lexicon, and a sentiment orientation score of the whole text is calculated according to the polarity (positive or negative) and the intensity of the sentiment word, to obtain a target sentiment score. If the target sentiment score is greater than a first pre-set score threshold (e. g. 0.5), it is determined that the feedback is positive. If the target sentiment score is less than a second pre-set score threshold (such as -0.5), it is determined that the feedback is negative. If the target sentiment score is between the first pre-set score threshold and the second pre-set score threshold, it is determined that the feedback is an opinion feedback.

If the target feedback type is an opinion feedback type, the target AI model is optimized according to target feedback data to obtain an optimized target AI model. Specifically, semantic analysis can be performed on the target feedback data to clearly identify issues raised by users or improvement suggestions proposed. The parameters of the target AI model are adjusted according to the issues or improvement suggestions. For example, if the user feeds back that the diagnosis result of model is too conservative or improved, parameters related to the decision threshold in the model can be adjusted. If it is found that the weights of the model on certain features are irrational, resulting in inaccurate diagnosis, the weights of these features need to be adjusted, thereby obtaining an optimized target AI model.

In conclusion, the present disclosure provides an AI-based vehicle diagnosis method and the method includes the following. A vehicle diagnosis main page of the diagnostic device is displayed, where the vehicle diagnosis main page includes an AI auxiliary control. A target operating state of the diagnostic device is obtained, the target operating state including one of the following: a normal state and a diagnosis abnormality state. In response to the target operating state being the diagnosis abnormality state, an AI diagnosis interaction page is displayed in response to a trigger operation for the AI auxiliary control, where the AI diagnosis interaction page has a first information-display-region, a second information-display-region, and an information input window. A target question text corresponding to an information input operation is determined in response to the information input operation on the information input window, and the target question text is displayed in the first information-display-region. The target question text is analyzed with a target AI model pre-set in the diagnostic device to obtain a target diagnostic suggestion. The target diagnostic suggestion is dismayed in the second information-display-region. In this way, by introducing an AI auxiliary control, the user only needs to click one key to activate an AI function (i. e. the target AI model) to perform vehicle diagnosis, without requiring a complex operation procedure, thereby reducing the operation complexity of vehicle diagnosis.

As illustrated in FIG. 8, which is a block diagram of functional units of an AI-based vehicle diagnosis system 800 provided in embodiments of the present disclosure. The AI-based vehicle diagnosis system 800 is applied to a diagnostic device and includes a displaying unit 801, a responding unit 802, and a diagnosing unit 803.

The displaying unit 801 is configured to display a vehicle diagnosis main page of the diagnostic device, where the vehicle diagnosis main page includes an AI auxiliary control.

The responding unit 802 is configured to obtain a target operating state of the diagnostic device, the target operating state including one of the following: a normal state and a diagnosis abnormality state; in response to the target operating state being the diagnosis abnormality state, display an AI diagnosis interaction page in response to a trigger operation for the AI auxiliary control, where the AI diagnosis interaction page has a first information-display-region, a second information-display-region, and an information input window; and determine a target question text corresponding to an information input operation in response to the information input operation on the information input window, and display the target question text in the first information-display-region.

The diagnosing unit 803 is configured to analyze the target question text with a target AI model pre-set in the diagnostic device to obtain a target diagnostic suggestion.

The displaying unit is further configured to displaying the target diagnostic suggestion in the second information-display-region.

Optionally, the AI-based vehicle diagnosis system 800 is further specifically configured to: obtain a pre-set first model and a pre-trained model, where both the first model and the pre-trained model are large language models; obtain a target task corresponding to the first model; perform migration learning on the first model to obtain a second model according to the pre-trained model and the target task; obtain first historical vehicle-diagnosis-data, where the first historical vehicle-diagnosis-data includes a question text and a diagnostic suggestion corresponding to the question text; pre-process the first historical vehicle-diagnosis-data to obtain second historical vehicle-diagnosis-data; divide the second historical vehicle-diagnosis-data into a training set and a test set according to a pre-set proportion; train the second model with the training set to obtain a third model; determine whether the third model meets a pre-set condition; in response to the third model meeting the pre-set condition, determine the third model as the target AI model; and in response to the third model not meeting the pre-set condition, continue to train the third model until a trained third model meets the pre-set condition, and determine the third model meeting the pre-set condition as the target AI model.

Optionally, in terms of determining the target question text corresponding to the information input operation in response to the information input operation on the information input window, the responding unit 802 is specifically configured to: in response to the information input operation on the information input window, receive a question text input by the information input operation to obtain a first question text; the first question text being a representation text of a natural language; extract a first keyword from the first question text to obtain *m* first keywords, *m* being a positive integer; determine a target communication intent according to the *m* first keywords, where the target communication intent includes one of the following: a chat intent and an inquiry intent; and convert the first question text into a text in a pre-set format according to the target communication intent and the *m* first keywords to obtain the target question text.

Optionally, in terms of analyzing the target question text with the target AI model pre-set in the diagnostic device to obtain the target diagnostic suggestion, the diagnosing unit 803 is configured to: obtain historical vehicle-diagnosis-data of the diagnostic device as third historical vehicle-diagnosis-data; determine whether the target question text is contained in the third historical vehicle-diagnosis-data; in response to the target question text being contained in the third historical vehicle-diagnosis-data, determine a diagnostic suggestion corresponding to the target question text in the third historical vehicle-diagnosis-data as the target diagnostic suggestion; in response to the target question text being not contained in the third historical vehicle-diagnosis-data, generate, with the target AI model, a diagnostic suggestion corresponding to the target question text according to the target communication intent, as a first diagnostic suggestion; obtain running data and log data of a target vehicle corresponding to the target question text as target running data and target log data; and determine the target diagnostic suggestion according to the target running data, the target log data, and the first diagnostic suggestion.

Optionally, in terms of determining the target diagnostic suggestion according to the target running data, the target log data, and the first diagnostic suggestion, the diagnosing unit 803 is specifically configured to: determine fault code data in the target log data; determine a target fault type according to the target running data and the fault code data; verify the first diagnostic suggestion according to the target fault type to obtain a target verification result; where the target verification result includes a verification success or a verification failure; in response to the target verification result being the verification success, determine the target diagnostic suggestion according to the first diagnostic suggestion; and in response to the target verification result being the verification failure, generate a diagnostic suggestion corresponding to the target fault type as the target diagnostic suggestion.

Optionally, a server of the diagnostic device is deployed with a retrieval augmented generation (RAG) service, and in terms of analyzing the target question text with the target AI model pre-set in the diagnostic device to obtain the target diagnostic suggestion, the diagnosing unit 803 is specifically configured to: transmit the target question text to the server, retrieve, through the RAG service, data related to the target question text , and obtain first retrieval data; fuse the first retrieval data and the target question text to obtain a target fused text; and analyze the target fused text with the target AI model to obtain the target diagnostic suggestion.

Optionally, the AI-based vehicle diagnosis system 800 is specifically further configured to: after displaying the target diagnostic suggestion in the second information-display-region, obtain target feedback data of a user for the target diagnostic suggestion; determine a target feedback type corresponding to the target feedback data, where the target feedback type includes one of the following: a positive feedback type, a negative feedback type, and an opinion feedback type; and in response to the target feedback type being the opinion feedback type, optimize the target AI model according to the target feedback data to obtain an optimized target AI model.

In specific implementation, the AI-based vehicle diagnosis system 800 described in embodiments of the present disclosure can be further configured to execute other implements described in any method embodiments described above.

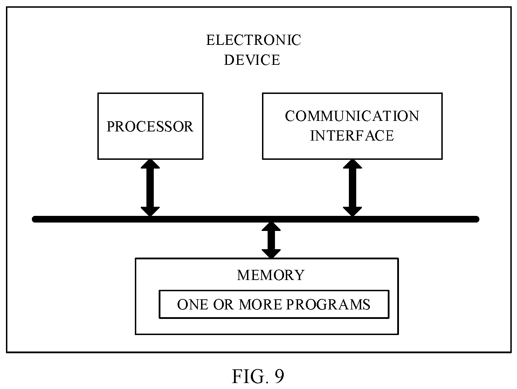

Reference is made to FIG. 9, which is a schematic structural diagram of an electronic device provided in embodiments of the present disclosure. The electronic device includes a processor, a memory, a communication interface, and one or more programs. The processor, the memory, and the communication interface are interconnected via a bus. The one or more programs are stored in the memory and are configured to be executed by the processor. In embodiments of the present disclosure, the electronic device includes a diagnostic device, and the one or more programs include instructions for executing: displaying a vehicle diagnosis main page of the diagnostic device, where the vehicle diagnosis main page includes an AI auxiliary control; obtaining a target operating state of the diagnostic device, the target operating state including one of the following: a normal state and a diagnosis abnormality state; in response to the target operating state being the diagnosis abnormality state, displaying an AI diagnosis interaction page in response to a trigger operation for the AI auxiliary control, where the AI diagnosis interaction page has a first information-display-region, a second information-display-region, and an information input window; determining a target question text corresponding to an information input operation in response to the information input operation on the information input window, and displaying the target question text in the first information-display-region; analyzing the target question text with a target AI model pre-set in the diagnostic device to obtain a target diagnostic suggestion; and displaying the target diagnostic suggestion in the second information-display-region.

Optionally, the one or more programs further include instructions for executing: obtaining a pre-set first model and a pre-trained model, where both the first model and the pre-trained model are large language models; obtaining a target task corresponding to the first model; performing migration learning on the first model to obtain a second model according to the pre-trained model and the target task; obtaining first historical vehicle-diagnosis-data, where the first historical vehicle-diagnosis-data includes a question text and a diagnostic suggestion corresponding to the question text; pre-processing the first historical vehicle-diagnosis-data to obtain second historical vehicle-diagnosis-data; dividing the second historical vehicle-diagnosis-data into a training set and a test set according to a pre-set proportion; training the second model with the training set to obtain a third model; determining whether the third model meets a pre-set condition; in response to the third model meeting the pre-set condition, determining the third model as the target AI model; and in response to the third model not meeting the pre-set condition, continuing to train the third model until a trained third model meets the pre-set condition, and determining the third model meeting the pre-set condition as the target AI model.

Optionally, in terms of determining the target question text corresponding to the information input operation in response to the information input operation on the information input window, the one or more programs include instructions for executing: in response to the information input operation on the information input window, receiving a question text input by the information input operation to obtain a first question text; the first question text being a representation text of a natural language; extracting a first keyword from the first question text to obtain *m* first keywords, *m* being a positive integer; determining a target communication intent according to the *m* first keywords, where the target communication intent includes one of the following: a chat intent and an inquiry intent; and converting the first question text into a text in a pre-set format according to the target communication intent and the *m* first keywords to obtain the target question text.

Optionally, in terms of analyzing the target question text with the target AI model pre-set in the diagnostic device to obtain the target diagnostic suggestion, the one or more programs include instructions for executing: obtaining historical vehicle-diagnosis-data of the diagnostic device as third historical vehicle-diagnosis-data; determining whether the target question text is contained in the third historical vehicle-diagnosis-data; in response to the target question text being contained in the third historical vehicle-diagnosis-data, determining a diagnostic suggestion corresponding to the target question text in the third historical vehicle-diagnosis-data as the target diagnostic suggestion; in response to the target question text being not contained in the third historical vehicle-diagnosis-data, generating, with the target AI model, a diagnostic suggestion corresponding to the target question text according to the target communication intent, as a first diagnostic suggestion; obtaining running data and log data of a target vehicle corresponding to the target question text as target running data and target log data; and determining the target diagnostic suggestion according to the target running data, the target log data, and the first diagnostic suggestion.

Optionally, in terms of determining the target diagnostic suggestion according to the target running data, the target log data, and the first diagnostic suggestion, the one or more programs include instructions for executing: determining fault code data in the target log data; determining a target fault type according to the target running data and the fault code data; verifying the first diagnostic suggestion according to the target fault type to obtain a target verification result; where the target verification result includes a verification success or a verification failure; in response to the target verification result being the verification success, determining the target diagnostic suggestion according to the first diagnostic suggestion; and in response to the target verification result being the verification failure, generating a diagnostic suggestion corresponding to the target fault type as the target diagnostic suggestion.

Optionally, a server of the diagnostic device is deployed with a retrieval augmented generation (RAG) service, and in terms of analyzing the target question text with the target AI model pre-set in the diagnostic device to obtain the target diagnostic suggestion, the one or more programs include instructions for executing: transmitting the target question text to the server, retrieving, via the RAG service, data related to the target question text, and obtaining first retrieval data; fusing the first retrieval data and the target question text to obtain a target fused text; and analyzing the target fused text with the target AI model to obtain the target diagnostic suggestion.

Optionally, the one or more programs include instructions for executing: after displaying the target diagnostic suggestion in the second information-display-region, obtaining target feedback data of a user for the target diagnostic suggestion; determining a target feedback type corresponding to the target feedback data, where the target feedback type includes one of the following: a positive feedback type, a negative feedback type, and an opinion feedback type; and in response to the target feedback type being the opinion feedback type, optimizing the target AI model according to the target feedback data to obtain an optimized target AI model.

In specific implementation, the electronic device described in embodiments of the present disclosure can be further configured to execute other implements described in any method embodiments described above.

Embodiments of the present disclosure also provide a computer-readable storage medium. The computer readable storage medium stores computer programs for electronic data interchange which, when executed, are operable with a computer to execute all or part of the operations of any of the methods described in the above-described method embodiments. The computer may include an electronic device.

Embodiments of the present disclosure also provide a computer program product. The computer program product includes a non-transitory computer readable storage medium that stores computer programs. The computer programs are operable with a computer to perform all or part of the operations of any of the methods described in the above method embodiments. The computer program product may be a software installation package. The computer may include an electronic device.

It is to be noted that, for the sake of simplicity, the foregoing method embodiments are described as a series of action combinations, however, it will be appreciated by those skilled in the art that the present disclosure is not limited by the sequence of actions described. According to the present disclosure, certain steps or operations may be performed in other order or simultaneously. Besides, it will be appreciated by those skilled in the art that the embodiments described in the specification are exemplary embodiments and the actions and modules involved are not necessarily essential to the present disclosure.

In the foregoing embodiments, the description of each embodiment has its own emphasis. For the parts not described in detail in one embodiment, reference may be made to related descriptions in other embodiments. In the embodiments of the disclosure, the apparatus disclosed in embodiments provided herein may be implemented in other manners. For example, the device/apparatus embodiments described above are merely illustrative; for instance, the division of the unit is only a logical function division and there can be other manners of division during actual implementations, for example, multiple units or components may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection, mechanical connection, or other forms of connection.

One of ordinary skill in the art may understand that all or a part of the processes of the methods in the foregoing embodiments may be implemented by a computer program instructing relevant hardware. The program may be stored in a computer-readable storage medium. When the program is executed, the processes of the foregoing method embodiments may be included. The foregoing storage medium includes: a read only memory (ROM), or any medium that can store program codes, such as a random access memory (RAM), a magnetic disk, or an optical disc.

Steps of the method or algorithm described in the embodiments of present application may be implemented by means of hardware, and may also be implemented by means of software instructions executed by a processor. The software instructions may consist of respective software modules that may be stored in RAM, flash memory, ROM, an erasable programmable read-only memory (EPROM), an electrically erasable programmable read only memory (EEPROM), a register, a hard disk, a removable disk, a compact disc read only memory (CD-ROM), or any other forms of storage medium known in the art. An exemplary storage medium is coupled to the processor such that the processor can read information from, and write information to, the storage medium. Certainly, the storage medium may also be a part of the processor, and the processor and the storage medium may be located in an application specific integrated circuit (ASIC). In addition, the ASIC may be located in a terminal device or a management device. Certainly, the processor and the storage medium may also exist in the terminal device or the management device as discrete components.

One of ordinary skill in the art may be appreciated that in the above one or more example, all or part of functions described in embodiments of the present disclosure can be implemented through software, hardware, firmware, or any other combination thereof. When implemented by software, all or part of the functions can be implemented in a form of a computer program product. The computer program product includes one or more computer instructions. When the computer program instructions are loaded and executed on a computer, all or part of the processes or functions of the embodiments of the disclosure are performed.

The computer can be a general-purpose computer, a special-purpose computer, a computer network, or other programmable apparatuses. The computer instruction can be stored in a computer readable storage medium, or transmitted from one computer readable storage medium to another computer readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer readable storage medium can be any computer accessible usable-medium or a data storage device such as a server, a data center, or the like which is integrated with one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

Each module/unit in various devices or products described in the foregoing embodiments may be a software module/unit or a hardware module/unit, or some may be a software module/unit and some may be a hardware module/unit. For example, with regard to various devices or products applied to or integrated into a chip, various modules/units included therein may all be realized by means of hardware such as a circuit. Alternatively, at least some of the modules/units may be realized by means of a software program run on a processor integrated into the chip, and the rest (if any) modules/units may be implemented by means of hardware such as a circuit. The same also applies to various devices or products applied to or integrated into a chip module or various devices or products applied to or integrated into a terminal device.

The objectives, technical solutions, and advantages of embodiments of the disclosure are described in detail in the foregoing embodiments. It may be appreciated that, the foregoing elaborations are merely some embodiment of embodiments of the disclosure, but are not intended to limit the protection scope of embodiments of the disclosure. Any modifications, equivalent replacements, improvements, and the like made based on the technical solutions of embodiments of the disclosure shall all fall within the protection scope of embodiments of the disclosure.

## Claims

1. An artificial intelligence (AI)-based vehicle diagnosis method, applied to a diagnostic device and comprising:
displaying a vehicle diagnosis main page of the diagnostic device, wherein the vehicle diagnosis main page comprises an AI auxiliary control;
obtaining a target operating state of the diagnostic device, the target operating state comprising one of the following: a normal state and a diagnosis abnormality state;
in response to the target operating state being the diagnosis abnormality state, displaying an AI diagnosis interaction page in response to a trigger operation for the AI auxiliary control, wherein the AI diagnosis interaction page has a first information-display-region, a second information-display-region, and an information input window;
determining a target question text corresponding to an information input operation in response to the information input operation on the information input window, and displaying the target question text in the first information-display-region;
analyzing the target question text with a target AI model pre-set in the diagnostic device to obtain a target diagnostic suggestion; and
displaying the target diagnostic suggestion in the second information-display-region.

2. The method of claim 1, further comprising:
obtaining a pre-set first model and a pre-trained model, wherein both the first model and the pre-trained model are large language models (LLMs);
obtaining a target task corresponding to the first model;
performing migration learning on the first model to obtain a second model according to the pre-trained model and the target task;
obtaining first historical vehicle-diagnosis-data, wherein the first historical vehicle-diagnosis-data comprises a question text and a diagnostic suggestion corresponding to the question text;
pre-processing the first historical vehicle-diagnosis-data to obtain second historical vehicle-diagnosis-data;
dividing the second historical vehicle-diagnosis-data into a training set and a test set according to a pre-set proportion;
training the second model with the training set to obtain a third model;
determining whether the third model meets a pre-set condition;
in response to the third model meeting the pre-set condition, determining the third model as the target AI model; and
in response to the third model not meeting the pre-set condition, continuing to train the third model until a trained third model meets the pre-set condition, and determining the third model meeting the pre-set condition as the target AI model.

3. The method of claim 1 or 2, wherein determining the target question text corresponding to the information input operation in response to the information input operation on the information input window comprises:
in response to the information input operation on the information input window, receiving a question text input by the information input operation to obtain a first question text; the first question text being a representation text of a natural language;
extracting a first keyword from the first question text to obtain *m* first keywords, *m* being a positive integer;
determining a target communication intent according to the *m* first keywords, wherein the target communication intent comprises one of the following: a chat intent and an inquiry intent; and
converting the first question text into a text in a pre-set format according to the target communication intent and the *m* first keywords to obtain the target question text.

4. The method of claim 3, wherein analyzing the target question text with the target AI model pre-set in the diagnostic device to obtain the target diagnostic suggestion comprises:
obtaining historical vehicle-diagnosis-data of the diagnostic device as third historical vehicle-diagnosis-data;
determining whether the target question text is contained in the third historical vehicle-diagnosis-data;
in response to the target question text being contained in the third historical vehicle-diagnosis-data, determining a diagnostic suggestion corresponding to the target question text in the third historical vehicle-diagnosis-data as the target diagnostic suggestion;
in response to the target question text being not contained in the third historical vehicle-diagnosis-data, generating, with the target AI model, a diagnostic suggestion corresponding to the target question text according to the target communication intent, as a first diagnostic suggestion;
obtaining running data and log data of a target vehicle corresponding to the target question text as target running data and target log data; and
determining the target diagnostic suggestion according to the target running data, the target log data, and the first diagnostic suggestion.

5. The method of claim 4, wherein determining the target diagnostic suggestion according to the target running data, the target log data, and the first diagnostic suggestion comprises:
determining fault code data in the target log data;
determining a target fault type according to the target running data and the fault code data;
verifying the first diagnostic suggestion according to the target fault type to obtain a target verification result; wherein the target verification result comprises a verification success or a verification failure;
in response to the target verification result being the verification success, determining the target diagnostic suggestion according to the first diagnostic suggestion; and
in response to the target verification result being the verification failure, generating a diagnostic suggestion corresponding to the target fault type as the target diagnostic suggestion.

6. The method of claim 1 or 2, wherein a server of the diagnostic device is deployed with a retrieval augmented generation (RAG) service, and analyzing the target question text with the target AI model pre-set in the diagnostic device to obtain the target diagnostic suggestion comprises:
transmitting the target question text to the server, retrieving, through the RAG service, data related to the target question text, and obtaining first retrieval data;
fusing the first retrieval data and the target question text to obtain a target fused text; and
analyzing the target fused text with the target AI model to obtain the target diagnostic suggestion.

7. The method of claim 1 or 2, wherein after displaying the target diagnostic suggestion in the second information-display-region, the method further comprises:
obtaining target feedback data of a user for the target diagnostic suggestion;
determining a target feedback type corresponding to the target feedback data, wherein the target feedback type comprises one of the following: a positive feedback type, a negative feedback type, and an opinion feedback type; and
in response to the target feedback type being the opinion feedback type, optimizing the target AI model according to the target feedback data to obtain an optimized target AI model.

8. An artificial intelligence (AI)-based vehicle diagnosis system, applied to a diagnostic device and comprising:
a displaying unit configured to display a vehicle diagnosis main page of the diagnostic device, wherein the vehicle diagnosis main page comprises an AI auxiliary control;
a responding unit configured to obtain a target operating state of the diagnostic device, the target operating state comprising one of the following: a normal state and a diagnosis abnormality state; in response to the target operating state being the diagnosis abnormality state, display an AI diagnosis interaction page in response to a trigger operation for the AI auxiliary control, wherein the AI diagnosis interaction page has a first information-display-region, a second information-display-region, and an information input window; and determine a target question text corresponding to an information input operation in response to the information input operation on the information input window, and display the target question text in the first information-display-region; and
a diagnosing unit configured to analyze the target question text with a target AI model pre-set in the diagnostic device to obtain a target diagnostic suggestion;
the displaying unit being further configured to displaying the target diagnostic suggestion in the second information-display-region.

9. An electronic device, comprising: a processor, a memory, a communications interface, and one or more programs stored in the memory and configured to be executed by the processor, wherein the programs comprise instructions for executing the method of any one of claims 1 to 7.

10. A computer-readable storage medium, storing a computer program for electronic data interchange (EDI), wherein the computer program is configured to enable a computer to execute the method of any one of claims 1 to 7.
